# EUROPEAN PATENT APPLICATION

(11) **EP 1 882 903 A2**
(43) Date of publication of application: **30.01.2008**
(21) Application number: 07252960.5
(22) Date of filing: 26.07.2007
(51) Int. Cl.: G01C 22/00

(54) **Arm mounting type electronic pedometer**

(30) Priority: 27.07.2006 JP 2006204110
(71) Applicant: Seiko Instruments Inc., Chiba-shi, Chiba (JP)
(72) Inventor: Noguchi, Eriko, c/o Seiko Instruments Inc., Chiba-shi, Chiba (JP); Takakura, Akira, c/o Seiko Instruments Inc., Chiba-shi, Chiba (JP)
(74) Representative: Cloughley, Peter Andrew

(57) **Abstract**

To provide an arm mounting type electronic pedometer capable of minimizing a planar size. An arm mounting type electronic pedometer 1 includes a piezoelectric type acceleration sensor 60 for sensing a walk, a circuit board 10 expanded perpendicularly to a thickness direction T at a middle portion of the thickness direction T of the electronic pedometer 1, and a battery 22 arranged on a side of one main face 11 of the circuit board. The piezoelectric acceleration sensor is formed at a region at least partially overlapping the battery 22 on a side of other main face 12 of the circuit board 10 and in view from a thickness direction, and a region of the conductive pattern P on the one main face side of the circuit board 10 overlaps the piezoelectric type acceleration sensor 60 mounted to the circuit board 10 in view from the thickness direction T. A display panel 40 is arranged at a location on the side of the other main face 12 of the circuit board 10 and at an interval from the circuit board 10, and a plate-like conductor 50 is arranged between the circuit board 10 and the display panel 40.

## Description

The present invention relates to an arm mounting type electronic pedometer including a piezoelectric type acceleration sensor.

An arm mounting type pedometer is mounted to the wrist of a user as in a wristwatch for sensing a walk of the user and typically adopts a mode of a pedometer for counting the number of steps of the user. Naturally, walk related information related to the number of steps is frequently processed. When a walk is sensed by sensing a motion of the wrist of the user in walking, the walk can be sensed also by a mechanical sensor such as a pendulum (for example, Patent document JP-A-2002-221434). However, in order to firmly sense a walk pace by pace even in a case in which there is not actually the motion of the wrist as in a case of walking while speaking to portable telephone, an acceleration sensor is preferable, in order to detect a variation in an acceleration at a region of a low frequency of about 1 through 2 Hz or smaller, actually, a piezoelectric type acceleration sensor is used. According to an arm mounting type electronic pedometer including the piezoelectric type acceleration sensor, the piezoelectric type acceleration sensor is arranged such that a maximum sensitivity axis (a direction in which a sensitivity with regard to an acceleration is maximized) is directed in a predetermined direction relative to a case of the arm mounting type electronic pedometer (Patent document JP-A-2005-309693).

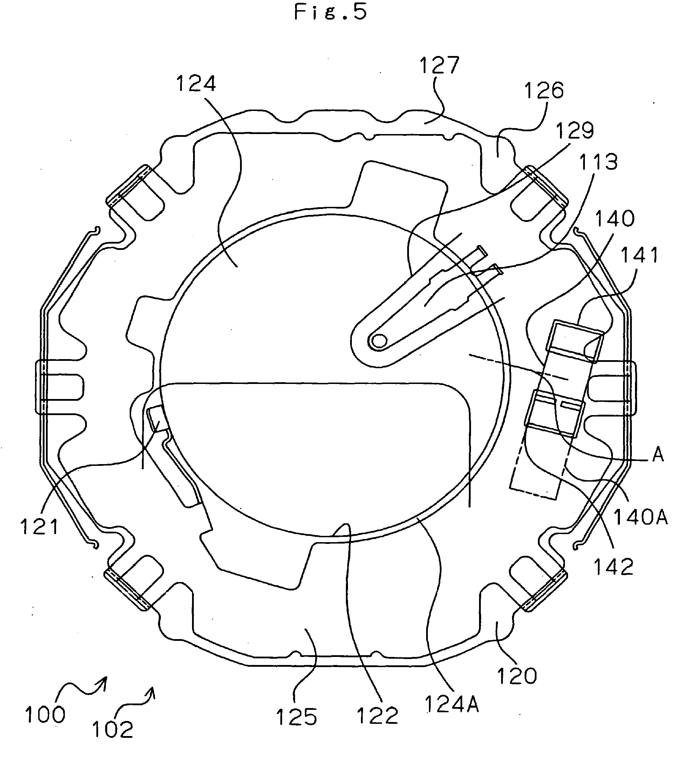

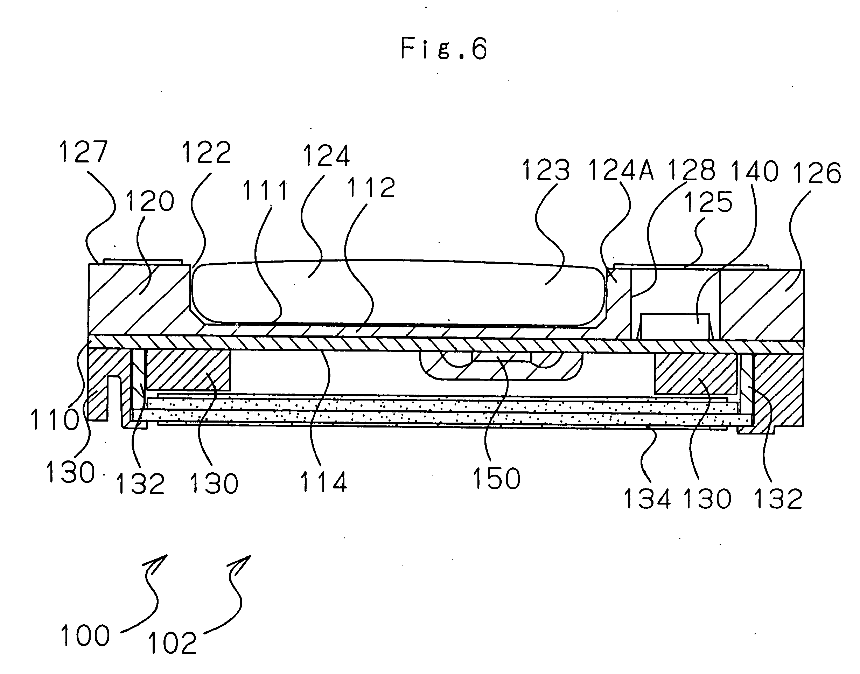

Fig. 5 and Fig. 6 show a main body portion 102 arranged at a case (not illustrated) of an arm mounting type electronic pedometer 100 of a background art.

As shown by Fig. 6, the electronic pedometer main body portion 102 includes a circuit board 110 at a middle portion in a thickness direction. On a side of a case back (not illustrated) of the circuit board 110, a button type battery 124 is contained in a recess portion 122 of a battery frame 120. On the other hand, a glass (not illustrated) side of the circuit board 110 is arranged with a liquid crystal panel 134 supported by a panel frame 130 and connectors 132, 132.

A peripheral wall portion 126 of the recess portion 122 of the battery frame 120 is formed with an opening 128 for containing a piezoelectric type acceleration sensor 140, and the piezoelectric type acceleration sensor 140 is mounted to a region at inside of the opening 128 in a battery side surface 112 of the circuit board 110. As is known from Fig. 5, the opening 128 and the piezoelectric type acceleration sensor 140 disposed at inside thereof are formed or arranged to be substantially in line with a direction of extending the peripheral wall portion (peripheral direction). However, as mentioned later in details, strictly speaking, a longitudinal direction of the acceleration sensor 140 is more or less shifted from a peripheral direction at a position of arranging the acceleration sensor 140.

An upper face 127 of the peripheral wall portion 126 of the battery frame 120 including an upper side of the opening 128 of the battery frame 120 in view from Fig. 6 is arranged with a switch spring 125 electrically connected to a positive pole 123 of the battery 124 by a contact 121 (Fig. 5). The switch spring 125 operated also as a ground terminal is provided with a function of stabilizing a potential at a vicinity of the piezoelectric type acceleration sensor 140 and restraining electronic noise from invading an output terminal of the piezoelectric acceleration sensor 140 by being arranged to cover the opening 128 arranged with the piezoelectric type acceleration sensor 140. A negative pole contact 113 brought into contact with a negative pole 111 of the battery 124 on a case back side main face or the surface 112 of the circuit board 110 is disposed at an opening 129 of a bottom wall of the battery containing recess portion 122.

On the other hand, a liquid crystal panel side main face or a surface 114 of the circuit board 110 is mounted with various circuit parts including an integrated circuit 150 including a microprocessor function and having a walk data processing function.

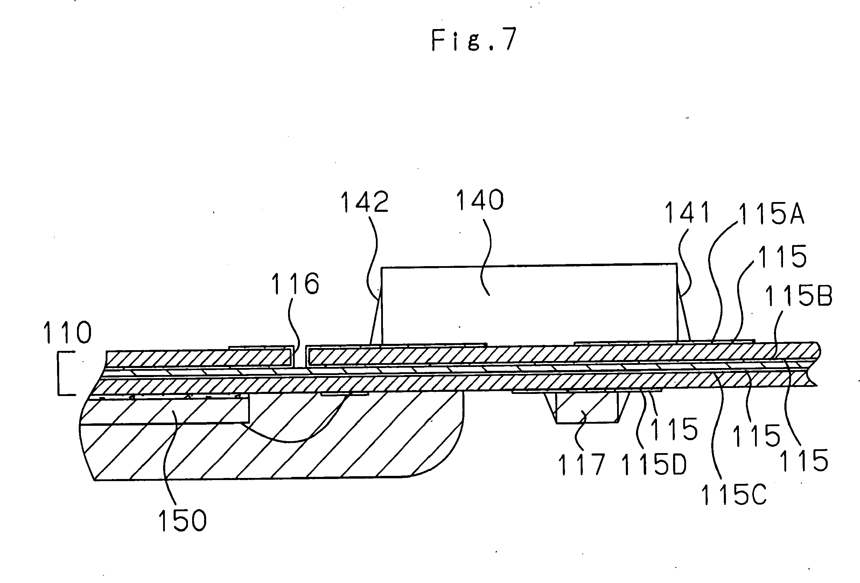

Further, as shown by a partially enlarged sectional explanatory view of Fig. 7, according to the electronic pedometer 100 of the background art, in order to ensure a region of mounting the various circuit parts in a state of a limited planar size, the circuit board 110 comprises a multilayer board having 4 layers of conductive patterns or conductive patterns 115A, 115B, 115C, 115D (designated by notation 115 when generally referred to). Portions or most portions of the middle conductive patterns 115B, 115C are constituted to be electrically connected to each other by way of a through hole 116 or the like to apply a ground potential. As is known from Fig. 7, according to the electronic pedometer 100 of the background art, by providing the multilayer conductive patterns or the multilayer wiring patterns 115, other circuit part 117 can be mounted to a back face side of the piezoelectric acceleration sensor 140.

However, according to the arm mounting type electronic pedometer 100 of the background art, in order to ensure a region of arranging the acceleration sensor 140 on an outer side of the battery 124 (on an outer side of an outer peripheral face 124A of the battery 124), it is necessary to project the circuit board 110 comparatively by a large amount to the outer side of the outer peripheral face of the battery 124. Further, according to the arm mounting type electronic pedometer 100, in order to enable the acceleration sensor 140 to firmly sense even a weak walk signal, it is necessary to mount the acceleration sensor 140 to the circuit board 110 in a state in which a maximum sensitivity axis A of the acceleration sensor 140 (direction orthogonal to a longitudinal direction of the acceleration sensor 140) becomes a specific direction (typically, in a direction of being inclined to a direction of extending the wrist by 12 . 5 degrees (when mounted to the left wrist, a direction in parallel with a direction of an hour hand directed to 2 o'clock 35 minutes (or 8 o' clock 35 minutes) in conversion to a position of the hour hand of an analog timepiece)).

Therefore, according to the arm mounting type electronic pedometer 100, when the acceleration sensor 140 is going to be contained at inside of the opening 128 of the peripheral wall portion 126 while minimizing a length of projecting the peripheral wall portion 126 of the battery frame 120 in a diameter direction (width of the peripheral wall portion 126), a position for arranging the acceleration sensor 140 is limited to a specific angular range or a specific angular position. However, for example, when the acceleration sensor 140 is going to be arranged at an angular position minimizing the length in the diameter direction (for example, a position indicated by an imaginary line 140A in Fig. 5 (a position at which a longitudinal direction of the acceleration sensor coincides with a tangential line direction (peripheral direction) of the position)), the acceleration sensor 140A is excessively proximate to a position of mounting a push button switch, and therefore, there is a concern of hampering operation of the push button switch or erroneously detecting an impact in operating the push button switch as a walk signal by the acceleration sensor 140A. Therefore, in consideration of the arrangement relative to other part, according to the electronic type pedometer of the background art, for example, as shown by Fig. 5, the acceleration sensor 140 is arranged at a position of 9 o'clock of the timepiece more or less shifted from the position of 8 o'clock 35 minutes of the timepiece in a state of being inclined to the peripheral direction at the position. Such an inclined state of the acceleration sensor 140 alone gives rise to an increase in the size in the diameter direction of the circuit board 110. Further, the more proximate to an outer peripheral edge of the circuit board 110 the acceleration sensor 140 is made, the more liable the impact instantaneously is applied to the push button switch as described above or the impact applied to the peripheral wall of the case is considerably applied to the acceleration sensor 140 by way of the outer peripheral portion of the circuit board 110, there is a high concern of erroneously detecting a mechanical impact from an external portion as acceleration by the acceleration sensor 140, and therefore, in order to make the acceleration sensor 140 more or less remote from the outer peripheral portion of the circuit board 140, a side in a diameter direction of the circuit board 110 needs to be more or less large.

That is, according to the electronic type pedometer including the acceleration sensor of the background art, it is necessary to project the circuit board 110 mounted with the acceleration sensor 140 to an outer side of the battery to some degree to be able to avoid erroneous detection of impact or the like to the push button switch or the case outer peripheral wall portion, and it is difficult to avoid that the planar size of the circuit board 110 is increased to some degree. Further, so far as large-sized formation of the circuit board 110 is going to be more or less avoided, a portion capable of arranging the acceleration sensor 140 is limited, and it is difficult to avoid that a degree of freedom of selecting a planar layout in designing the circuit or designing the structure is reduced. From a view point of mounting to arrange various circuit parts onto the circuit board 110, when a position and a region occupied by the acceleration sensor 140 are previously determined, there is a concern that other circuit part is hampered from being arranged, in order to avoid the concern, there can also be a case of needing to more or less enlarge the circuit board 110.

On the other hand, when the arm is not actually swung, an output signal of the acceleration sensor 140 in accordance with walking becomes weak, and therefore, the output of the acceleration sensor 140 is liable to receive an influence of noise, and therefore, in order to avoid noise from being inputted to the output, with regard to the circuit board 110, on a back face side of an output side terminal 141 of a pair of output terminals 141, 142 of the acceleration sensor 140, it is necessary to form a conductive pattern at a constant potential as in a conductive pattern region for forming the ground, according to the electronic pedometer 100, as shown by Fig. 7, the ground forming layer 115B is formed on the back face side of the acceleration sensor 140.

Further, according to the electronic type pedometer 100 of the background art, when assumedly, a board having wiring patterns only at head and tail - that is, only on both surfaces - thereof is to be used as the circuit board 110, since (1) as described above, a position and a direction of arranging the acceleration sensor 14 0 are limited as described above and (2) it is necessary to ensure a wide constant potential pattern (for example, ground pattern) on the back face side of the output side terminal 141 of the acceleration sensor 140, it is necessary to ensure a wide ground pattern region at the display panel side surface 114 of the circuit board by a shape of restricting the direction and the position of the sensor. Further, since (3) the acceleration sensor 140 is mounted on a side opposed to other circuit part, it is necessary to ensure a wiring at a surface on a side opposed to the circuit board by way of a through hole or the like. As a result, according to the electronic type pedometer 100 of the background art, when assumedly, a board having wiring patterns only at head and tail thereof as the circuit board 110 (single layer board) is going to be used, a considerably large region of the display panel side surface 114 of the circuit board cannot be utilized for mounting other circuit part. Further, the region which cannot be utilized is restricted by a shape bound by the direction and the position of the acceleration sensor disposed on a side of the back face 112, and therefore, other circuit part having a large dimension is restricted from being arranged and an efficient layout of a circuit part is difficult to be carried out, and there is a concern that a desired circuit cannot be formed without further enlarging the circuit board. Therefore, according to the electronic pedometer 100 of the background art, the board 110 comprises the multilayer board to be able to mount the circuit part 117 or the like as shown by Fig. 7. In other words, according to the electronic type pedometer 100 of the background art for mounting the piezoelectric type acceleration sensor 140 at the case back side main face 112 of the circuit board 110 on the outer side of the outer periphery of the battery, when the single layer board is going to be used as the circuit board 110, it is necessary to further enlarge the planar side of the circuit board 110.

It is an object of the present invention to provide an arm mounting type electronic pedometer capable of minimizing a planar size thereof.

In order to achieve the object, an arm mounting type electronic pedometer of the invention is an arm mounting type electronic pedometer including a piezoelectric type acceleration sensor for sensing a walk, the arm mounting type electronic pedometer comprising a circuit board expanded perpendicularly to a thickness direction of the electronic pedometer at a middle portion in the thickness direction of the electronic pedometer, a battery arranged on one main face side of the circuit board, the piezoelectric type acceleration sensor mounted to the circuit board on other main face side of the circuit board at a region at least partially overlapping the battery in view from the thickness direction, and a conductive pattern formed at a region of a surface on the one main face side of the circuit board overlapping the piezoelectric type acceleration sensor in view from the thickness direction.

According to the arm mounting type electronic pedometer of the invention, the piezoelectric type acceleration sensor is mounted to the circuit board at the region of overlapping the battery at least partially in view from the thickness direction, and therefore, different from the electronic pedometer of the background art, it is not necessary to ensure the wide region for mounting the piezoelectric type acceleration sensor on the outer side of the battery with regard to a direction of expanding the electronic pedometer (direction of extending a face orthogonal to the thickness direction), and therefore, a planar spread of the circuit board can be restrained, and the planar size can be minimized. Further, according to the arm mounting type electronic pedometer of the invention, there is provided the conductive pattern expanded to the region of the surface on the one main face side of the circuit board overlapping the piezoelectric acceleration sensor in the thickness direction, and therefore, by the conductive pattern which is easy to be maintained at a comparatively constant stable potential, electric noise can be minimized to invade from the back face side to the piezoelectric acceleration sensor. As a result, an output of the piezoelectric type acceleration sensor can be applied to a circuit of processing a walk signal by a comparatively high S/N ratio. Here, although at the conductive pattern region, the circuit board is not actually mounted with other circuit part, and therefore, the circuit board is apparently hampered from being utilized effectively, according to the arm mounting type electronic pedometer of the invention, the battery is arranged at a position of facing the conductive pattern, and therefore, by making the conductive pattern region coincide with a back face side region of the battery (region facing the battery) which is inherently unsuitable for mounting the circuit part, a region of not mounting the circuit board is minimized. In other words, according to the arm mounting type electronic type timepiece of the invention, the region of the circuit board constituting the region which is not utilized because the region faces the battery (surface region at which the circuit part is not mounted) is constituted by the conductive pattern region on the back face side of the piezoelectric type acceleration sensor, and therefore, by summarizing the regions at which the circuit part cannot be mounted owing to two kinds of causes are summarized to one portion, as a result, an efficiency of utilizing the circuit board is promoted as a whole. Therefore, according the arm mounting type electronic pedometer of the invention, by both of the effective utilization of the circuit board, and movement (rearrangement) of the acceleration sensor from an outer side region of the battery to an inner side region overlapping the battery in a planar view thereof, the planar size of the circuit board can be minimized, and planar small-sized formation of the electronic pedometer can be carried out.

Further, the region of the conductive pattern may be overlapped to an entire region of the acceleration sensor, or may be overlapped to a portion of the region of the acceleration sensor in view from the thickness direction. The region of the conductive pattern is expanded typically also to the outer side of the region of overlapping the acceleration sensor in view from the thickness direction.

Further, according to the arm mounting type electronic pedometer of the invention, the piezoelectric type acceleration sensor is mounted to the circuit board at the region of overlapping the battery at least partially in view from the thickness direction, and therefore, the piezoelectric type acceleration sensor can be disposed at a location remote from an outer peripheral edge of the circuit board. Therefore, according to the arm mounting type electronic pedometer of the invention, when the piezoelectric type acceleration sensor is mounted to the board in a specific orientation in accordance with a maximum sensitivity axis' (direction of maximizing sensitivity) thereof, different from the case of the electronic pedometer of the background art, it is not necessary to arrange the piezoelectric type acceleration sensor at a narrow region of the outer peripheral edge of the circuit board, and therefore, a degree of freedom of designing the piezoelectric type acceleration sensor and a circuit including other circuit part, and a degree of freedom of arranging the piezoelectric type acceleration sensor and other circuit part relative to each other (planar layout) are high. Here, according to the piezoelectric type acceleration sensor, a portion thereof (however, typically, 50 % or more) may be overlapped with the battery or an entire region thereof may be overlapped to the battery in view from the thickness direction in accordance with a desire.

Further, according to the arm mounting type electronic pedometer of the invention, as described above, the piezoelectric type acceleration sensor can be disposed at the location remote from the outer peripheral edge of the circuit board, and therefore, a concern of erroneously detecting a variation in acceleration by a mechanical impact caused by operating a push button switch or the like can also be reduced. As a result, an output of the piezoelectric type acceleration sensor can be applied to a circuit of processing a walk signal by a comparatively high S/N ratio. Further, according to the arm mounting type electronic pedometer of the invention, as described above, it is not necessary to arrange the piezoelectric type acceleration sensor at a narrow region of the outer peripheral edge of the circuit board and a limited portion in the peripheral direction, and therefore, a degree of freedom for arranging the piezoelectric type acceleration sensor to a desired position capable of avoiding an influence of an electric noise generating source such as various circuit parts and a mechanical noise generating source such as a push button switch as much as possible is high.

The battery of the arm mounting type electronic pedometer is typically a button type battery, typically, a thickness thereof is about several mm and an outer diameter thereof is about 1 through 2 cm.

According to the arm mounting type electronic pedometer of the invention, typically, the piezoelectric type acceleration sensor is arranged at a position at which a portion thereof including at least an output terminal on a side which is not a side of a reference potential (output side terminal) in a pair of the output terminals of the piezoelectric type acceleration sensor overlaps the battery in view from the thickness direction. The piezoelectric acceleration sensor includes the pair of output terminals, typically, one output terminal of the output terminals is actually maintained at a constant potential. In the specification, the output terminal on the side being maintained at the constant potential is referred to as an output terminal on a side of a reference potential. The constant potential is typically ensured by being connected to a positive pole or a negative pole of a battery including a comparatively large conductor portion. However, instead of making the constant potential coincide with the potential of the positive pole or the negative pole of the battery, the constant potential may be made to coincide with a potential of a portion of being maintained at a constant potential different relative to the positive pole or the negative pole. For example, when there is a portion having a constant potential different relative to the positive pole or the negative pole of the battery at a surrounding of the piezoelectric type acceleration sensor arranged on the circuit board, the potential of the portion may be adopted as the potential (reference potential) of the one output terminal of the piezoelectric type acceleration sensor as it is.

In this case, the conductive pattern,disposed on the back side of the battery and easy to be maintained at a comparatively constant stable potential stabilizes a variation in a potential of a surrounding of the output terminal of the piezoelectric type acceleration sensor, which is easy to receive an influence of noise, to restrain the output terminal from being affected by the influence of the noise. As a result, the output of the piezoelectric type acceleration sensor can be applied to the circuit of processing the walk signal by a comparatively high S/N ratio.

Naturally, a portion of the output terminal on a reference potential side (for example, earth (earth) side or ground (GND) side) of the piezoelectric type acceleration sensor may be disposed at a position of being overlapped with the battery in view from the thickness direction, further, when desired, a total of the output terminal on the reference potential side (for example, earth side) of the piezoelectric acceleration sensor may be disposed at a position of being overlapped with the battery. When limited to noise inputted from the battery side to the piezoelectric type acceleration sensor, although the higher the rate of an area of the piezoelectric type acceleration sensor disposed on the back side of the battery, the more preferable, as described later, it is preferable to provide a wiring pattern for an input/output signal of other circuit part to detour the piezoelectric type acceleration sensor, and therefore, there can be a case in which it is not necessarily preferable to arrange the piezoelectric acceleration sensor excessively to a center portion of the board from a view point of effectively utilizing the circuit board. Therefore, a final position of mounting the piezoelectric type acceleration sensor is determined also in consideration of other factors.

According to the arm mounting type electronic pedometer of the invention, typically, the conductive pattern is constituted to be (electrically) connected to a positive pole or a negative pole of the battery. In this case, the conductive pattern can stably be maintained at a constant potential, and therefore, a concern of receiving an influence of noise can firmly be reduced. As a result, the output of the piezoelectric type acceleration sensor can be applied to the circuit of processing the walk signal by the comparatively high S/N ratio. Further, here, the positive pole or the negative pole of the battery is typically on the earth side of the circuit. The earth side terminal is, for example, a terminal on a positive pole side of the battery. However, the earth side terminal may be a terminal on the negative pole side of the battery.

According to the arm mounting type electronic pedometer of the invention, the battery is mounted in a direction in which the negative pole of the battery faces the circuit board. In this case, for example, an opening is formed at a bottom wall of a battery containing recess portion of a battery frame and a negative pole terminal faces the opening. When the conductive pattern on the case back side surface of the circuit board is made to be at a potential the same as that of, for example, the positive pole of the battery, naturally, the conductive pattern is not formed at a region of the case back side surface (the one main face) of the circuit board opposed to the opening at which the negative pole terminal is present.

When desired, in the arm mounting type electronic pedometer of the invention, the battery may be mounted in a state of inverting upper and lower sides (head and tail) such that the positive pole of the battery is opposed to and brought into contact with the conductive pattern formed on the one main face side. When the potential of the conductive pattern on the case back side surface of the circuit board is made to be the same as that of the positive pole of the battery, for example, the battery containing recess portion is constituted by a mode of an opening or a through hole actually devoid of the bottom wall such that the positive pole of the battery is brought into direct contact with the conductive pattern. In this case, the negative pole terminal is brought into contact with the negative pole of the battery from an upper side (case back side) of the battery.

When the potential of the conductive pattern is made to be the same as that of the negative pole of the battery, in the above-described two examples, the positive pole maybe reread as the negative pole and the negative pole may be reread as the positive pole.

According to the arm mounting type electronic pedometer of the invention, typically, the piezoelectric type acceleration sensor is mounted to the circuit board in a state in which a maximum sensitivity axis thereof coincides with a predetermined direction and a longitudinal direction of the acceleration sensor is directed in a direction more proximate to a diameter direction than a peripheral direction of the circuit board at a position of arranging the acceleration sensor. In this case, typically, the acceleration sensor is arranged in a direction in which, of a pair of output terminals of the acceleration sensor, the (signal) output side terminal is disposed on an inner side of the reference potential side terminal (for example, earth side terminal) of the acceleration sensor. However, when desired, the direction may be reversed. Further, in this case, not only the acceleration sensor can be arranged on an inner side of the circuit board (a location remote from an outer peripheral edge portion thereof), but also when desired, other circuit part can be arranged at a vicinity of the outer peripheral edge portion of the circuit board, and an interval between various circuit parts can be increased.

According to the arm mounting type electronic pedometer of the invention, typically, a display panel is arranged on the other main face side of the circuit board at a location spaced apart from the circuit board by an interval therebetween, and a plate-like conductor is arranged between the circuit board and the display panel.

In this case, the plate-like conductor can be maintained at a constant stable potential, and therefore, a concern that a drive signal for the display panel or other input/output signal constitutes noise for the acceleration sensor can be minimized. As a result, the output of the piezoelectric acceleration sensor can be provided to a circuit of processing the walk signal by a comparatively high S/N ratio. Here, the plate-like conductor may typically comprise a metal plate, when desired, may be a conductive film or a nonconductive plate formed with a conductive layer. When the plate-like conductor is a metal plate or the like, a thickness thereof may be to a degree of hardly effecting an influence on a thickness of a total of the electronic pedometer. Further, although typically, the plate-like conductor is formed to have a spread actually the same as the display panel and a region including input/output signal lines thereto and therefrom, when desired, the plate-like conductor may be more or less smaller than the display panel so long as an entire region of the display panel can be covered in view from the acceleration sensor. Further, the plate-like conductor can play a role of preventing various circuit parts from being exposed by light or the like, and therefore, even when there is a part comparatively weak at radiation of light or the like which may come out from the display panel, a concern that the circuit part is influenced thereby can be minimized. However, for example, when an integrated circuit having a high height is formed sufficiently stably electrically or the like, a region of the plate-like conductor opposed to a portion or the like of the integrated circuit having the high height may be formed with an opening loosely fitted with a top portion of the integrated circuit portion or the like. In this case, an increase in the thickness by arranging the plate-like conductor can be minimized. Although the plate-like conductor is typically constituted by a flat plate shape, when desired, for example, the plate-like conductor may be constituted by a wall structure portion in a shape of a U-like shape or the like including a wall portion surrounding the acceleration sensor or may include the wall structure portion at a portion thereof.

According to the arm mounting type electronic pedometer of the invention, typically, the displaypanel includes a liquid crystal panel. In this case, a conductive surface or a metal face of the plate-like conductor can be operated also as a reflecting face. The liquid crystal display panel may be of a reflecting type, or a type including a light source of an EL (electroluminescence) panel or the like operated as a backlight on a back side.

The arm mounting type electronic pedometer of the invention typically further comprises an elastic conductive terminal arranged between a conductive pattern of conductive patterns on the circuit board connected to the positive pole or the negative pole of the battery and the plate-like conductor to maintain the plate-like conductor at a constant potential. In this case, the plate-like conductor can be maintained stably at the constant potential, and therefore, noise by the plate-like conductor can further firmly be prevented from invading. As a result, the output of the piezoelectric type acceleration sensor can be provided to the circuit of processing the walk signal by the high S/N ratio. Further, when desired, the constant potential to which the plate-like conductor is set may be other potential maintained at a predetermined constant potential difference relative to the potential of the positive pole or the negative pole of the battery, and the constant potential may coincide with or may not coincide with the reference potential of the piezoelectric type acceleration sensor.

According to the arm mounting type electronic pedometer of the invention, typically, the display panel includes an EL (electroluminescence) panel, and the plate-like conductor constitutes a ground electrode of the EL panel. In this case, the plate-like conductor per se can be operated also as a pole.

Typically, the arm mounting type electronic pedometer of the invention further comprises a spacer for maintaining an interval between the piezoelectric electric acceleration sensor and the plate-like conductor constant. In this case, a concern that the plate-like conductor constitutes a noise source of the acceleration sensor can firmly be restrained. As a result, the output of the piezoelectric type acceleration sensor can be provided to the circuit of processing the walk signal by the comparatively high S/N ratio. Further, the plate-like conductor serves to hold the display panel mechanically stably. Further, the spacer includes a seat portion for prohibiting the plate-like conductor from being proximate to the acceleration sensor, and a small gap remains normally between the seat portion and the acceleration sensor. However, when desired, the seat portion may actually be brought into contact with the surface of the acceleration sensor. The spacer typically comprises a portion of a panel frame for supporting the display panel. However, the spacer may be constituted by a separate part.

According to the arm mounting type electronic pedometer of the invention, typically, an input/output signal wiring pattern of other circuit part mounted to the circuit board is formed at the circuit board to detour the piezoelectric type acceleration sensor.

In this case, a concern that input/output signals to and from other circuit part constitutes a noise for the piezoelectric type acceleration sensor can be reduced. As a result, the output of the piezoelectric type acceleration sensor can be provided to the circuit of processing the walk signal by the comparatively high S/N ratio.

According to the walk signal outputted from the piezoelectric type acceleration sensor, typically, a frequency component thereof in correspondence with the walk signal is selectively passed through filter means such as a band pass filter, a voltage signal of about 1 mV is typically amplified to about 1 V by amplifying means, thereafter, converted into a digital walk signal by being converted by A/D (analog-digital) conversion to be subjected to a data processing.

Particularly, since the output signal of the piezoelectric type acceleration sensor is considerably amplified and thereafter subjected to the data processing, and therefore, when the circuit part processes the signal after amplifying the output signal from the acceleration sensor, it is necessary to avoid the signal of the circuit part from being inputted again to the acceleration sensor as - much as possible even by an extremely small portion thereof (partially) since there is a concern of exciting a resonance actually.

Further, the digital walk signal constituted by converting the walk signal into the digital signal after amplification includes an extremely high frequency component since the digital walk signal is constituted by a pulse signal on one hand, and includes a frequency component of about 1 through 2 Hz (typically, 90 through 120 times/minute) or smaller similar to the walk signal since the digital walk signal is generated by a frequency of repetition actually the same as that of the walk signal on the other hand. That is, the digital walk signal is easy to be inputted to a contiguous circuit part or a wiring pattern as noise by way of a capacity coupling or the like since the digital walk signal includes the high frequency component. However, noise of the digital walk signal significantly includes a frequency component of a particular repetition frequency (about 1 through 2 Hz or smaller), and therefore, when the noise of the digital walk signal is inputted to the output of the piezoelectric type acceleration sensor per se, the noise is considerably amplified to be erroneously recognized as a new walk signal. Therefore, it is necessary to avoid that the digital signal in correspondence with the walk signal is inputted again to the acceleration sensor even by an extremely small portion thereof (partially) as much as possible since there is a concern of exciting the resonance actually. Further, here, the digital walk signal is not limited to simply the digital signal directly in correspondence with the walk signal but even when the walk signal is a digital signal subjected to the digital processing to be outputted at a frequency of about 90 through 120 times/minute at each time of being inputted to the frequency, in a case in which the walk signal includes the repetition frequency of, for example, about 1 through 2 Hz as a result, the digital signal can constitute noise erroneously recognized as the walk signal for an output side terminal of the piezoelectric type acceleration sensor.

Therefore, it is preferable to reduce the concern of constituting the noise of the piezoelectric type acceleration sensor by the input/output signals to and from other circuit part by forming input/output signal wiring patterns to and from other circuit part mounted to the circuit board at the circuit board to detour the piezoelectric type acceleration sensor.

Embodiments of the present invention will now be described by way of further example only and with reference to the accompanying drawings, in which:
Fig. 1 is an explanatory view of a vertical section of a main body portion of an arm mounting type electronic pedometer of a preferable example according to the invention;
Fig. 2 is an explanatory view of a section taken along a line II-II (section along a glass side conductive (wiring) pattern of a circuit board) of the main body portion of the arm mounting type pedometer of Fig. 1 (however, only an outer peripheral portion of a panel frame is shown, a connector is omitted, and a portion constituting a section is not hatched since a portion constitutes a conductive pattern or the like);
Fig. 3 is a plane explanatory view showing an example of an outlook of the arm mounting type electronic pedometer of Fig. 1;
Fig. 4 is a block diagram showing an outline of a related function of the arm mounting type electronic pedometer of Fig. 1;
Fig. 5 is a plane explanatory view viewing a main body portion of an arm mounting type electronic pedometer of a background art viewed from a case back side;
Fig. 6 is an explanatory view of a vertical section similar to Fig. 1 of the main body portion of the arm mounting type electronic pedometer of Fig. 5; and
Fig. 7 is an explanatory view of a section enlarging a portion of the arm mounting type electronic pedometer of Fig. 5.

Next, a preferable embodiment of the invention will be explained based on a preferable example shown in the drawings.

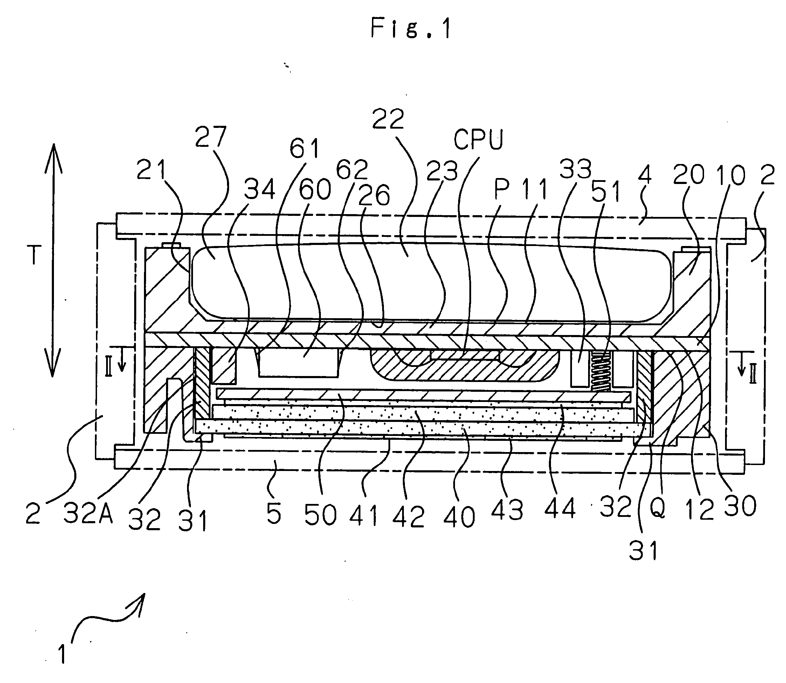

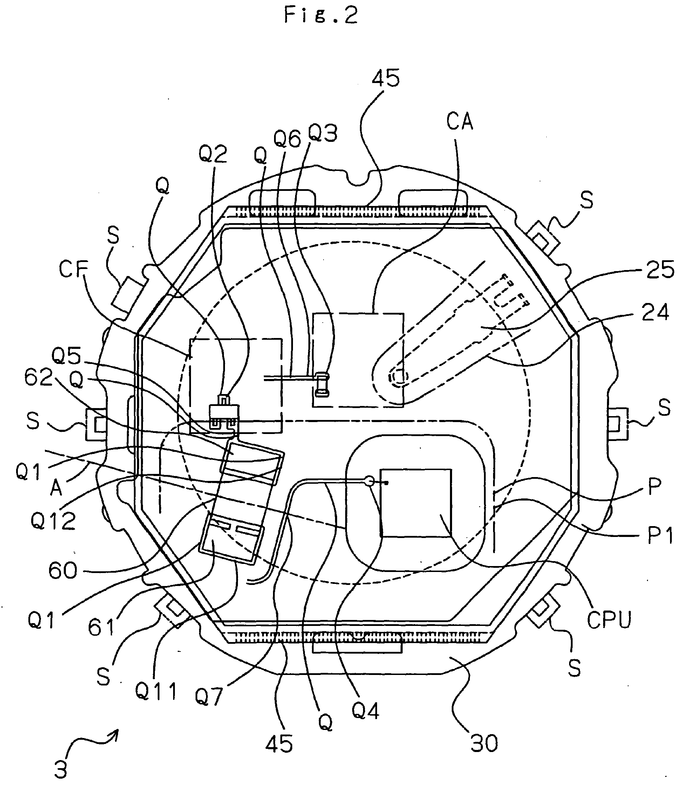

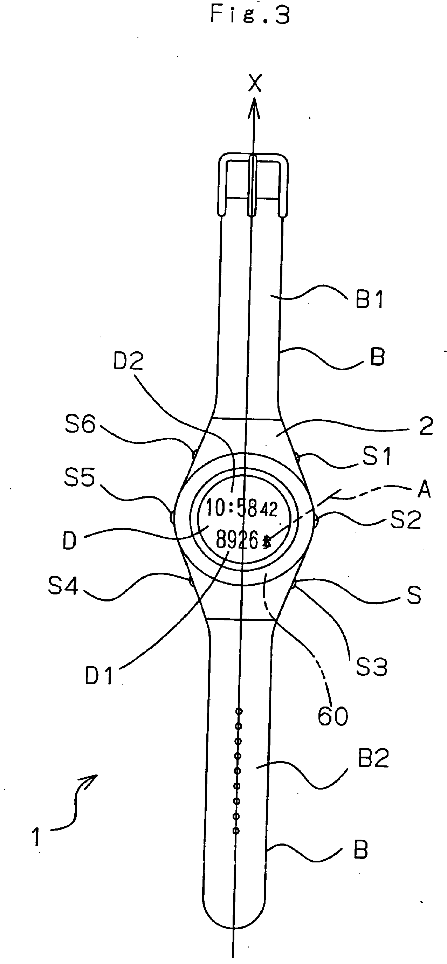

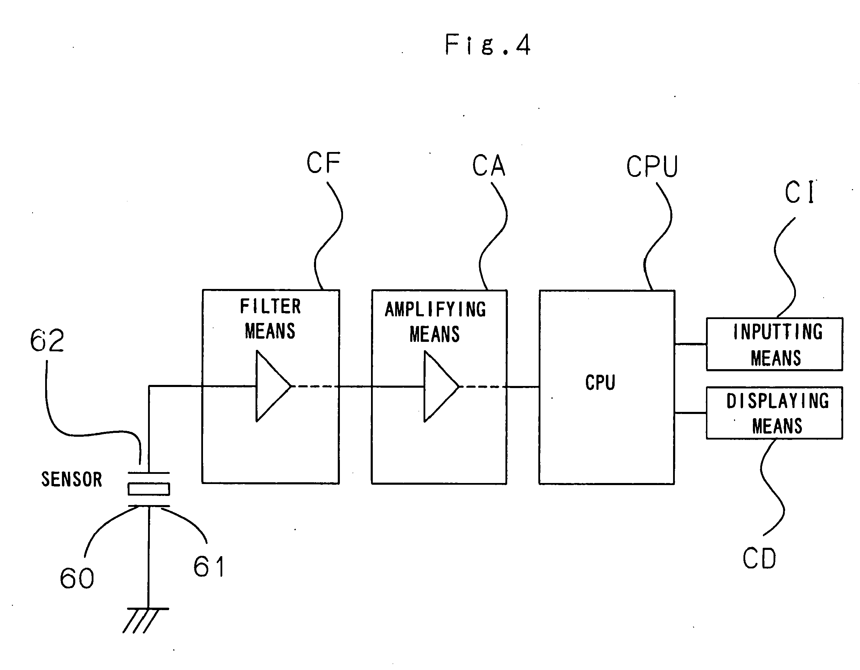

Fig. 1 and Fig. 2 show an electronic pedometer main body portion 3 arranged in a case 2 of an arm mounting type electronic pedometer 1 according to a preferable example of the invention by a vertical section and a plane section (section taken along a line II-II of Fig. 1), Fig. 3 shows an outlook of the arm mounting type electronic pedometer 1 according to the preferable example of the invention, Fig. 4 shows an outline of a related circuit portion of the arm mounting type electronic pedometer 1 by a block diagram.

As shown by Fig. 3, the arm mounting type electronic pedometer 1 includes one set of strap portions B1, B2 (designated by notation B when generally referred to or when not differentiated from each other) for mounting to the wrist of the both end portions of the case 2, and includes push button switches S1, S2, S3, S4, S5, S6 (designated by notation S when generally referred to or when not differentiated from each other) for an instruction of executing various processing functions and an instruction of a change of a mode at, for example, 6 portions thereof. Further, the arm mounting type electronic pedometer 1 includes a display portion D, the display portion D is displayed with walk related information D1 such as walk step number information, and other information D2 other than the walk related information such as time information. Naturally, in a specific display mode selected by operating the push button switch S, also a region displayed with information D2 in Fig. 3 may be displayed with walk related information of consumption of calories or the like, a total of display of the display region D may temporarily be constituted by information other than the walk related information, information of walk related information and the like may be displayed to be large only at one portion of the display region D or small at three portions or more thereof.

The arm mounting type electronic pedometer 1 includes a piezoelectric type acceleration sensor 60 as indicated by an imaginary line in Fig. 3 at inside of the case 2 as a portion of the main body portion 3. The acceleration sensor 60 is arranged such that a maximum sensitivity direction thereof coincides with a predetermined direction A in consideration of various states described in, for example, Patent Reference 2 and Patent Reference 1 such that a walk of a user can firmly be detected regardless of whether the user swings the hand in the walk in a state of being mounted to the wrist (not illustrated) of the user. The electronic pedometer 1 exemplified in Fig. 3 is arranged with the piezoelectric acceleration sensor 60 for the user mounting the electronic pedometer 1 at the left wrist. The direction A is typically set to 77.5 degrees in a face in parallel with an extended face of the display region D of the arm mounting type electronic pedometer 1 and relative to an up and down direction X of the display region D in view from the face of Fig. 3 (inclined to the direction of 3 o'clock of the analog timepiece by 12.5 degrees). Further, when the electronic pedometer 1 is for mounting to the right wrist, typically the piezoelectric type acceleration sensor 60 is arranged to constitute a direction inclined to a direction of 9 o'clock of the analog timepiece by 12.5 degrees. However, when desired, the maximum sensitivity direction A may be constituted by a specific direction which differs from 12.5 degrees in consideration of various modes or states of utilization thereof.

The electronic pedometer 1 including the acceleration sensor 60 is grossly provided with a circuit constitution as shown by a block diagram of Fig. 4.

That is, the piezoelectric type acceleration sensor 60 senses a variation in an acceleration in accordance with the walk as a variation in a polarized state of the piezoelectric element in accordance with a variation in a stress in correspondence with the variation in the acceleration and outputs a variation in a surface charge in correspondence with the variation in the polarization as a variation in a voltage of a capacitor (electrostatic capacitance). The electrostatic capacitance of the piezoelectric type acceleration sensor 60 per se is, for example, about 1 nF, and the variation in the voltage is, for example, about 1 mV. The output of the piezoelectric acceleration sensor 60 is provided to digital data processing means CPU by way of filter means CF and amplifying means CA. The filter means CF comprises, for example, a band filter circuit, and provides only a walk signal equal to or lower than about 1 through 2 Hz to the amplifying means CA. An upper limit of the band may be higher or lower than 2 Hz so far as the band can firmly permit transmission of the walk signal and can restrain transmission of noise other than the walk signal as much as possible. Further, when the walk is continuously carried out, although a lower limit thereof falls in a range of about 1 Hz, in consideration of a sudden walk, in order to firmly catch a first step of the walk signal, a signal having a small frequency region of about 0.1 Hz or smaller cannot be disregarded. Further, in consideration of a walk by one step, a low frequency side is difficult to be cut. The amplifying means CA comprises an amplifying circuit for amplifying a small voltage signal of about 1 mV to about 1 V by which a digital signal processing can be carried out, for example, the amplifying means CA comprises an amplifying circuit of a narrow band to some degree. Naturally, the filter means CF and the amplifying means CA may be constituted by one in view of a circuit. The voltage signal amplified by the amplifying means CA is provided to a data processing means CPU by way of an A/D conversion circuit (not illustrated) to carry to a data processing of walk related information of a processing of counting a walk step number or the like. Here, the data processing means CPU is a data processing means in wide meaning of an non-volatile memory portion capable of storing a program and a central processing unit or an operation processing apparatus capable of executing the program, the data processing apparatus may include an erasable memory for temporarily storing walk related information or the like of the user, or the memory may separately be provided. The CPU can include not only a simple microprocessor function but also various customized operation processing functions related to a walk data processing and a function as a so-to-speak IC for a timepiece capable of processing the time information D2 or the like and can include a circuit of driving the display means CD such as LCD (naturally, when desired, may be constituted by a separate member as an integrated circuit). The data processing means CPU not only receives an input signal from the push button switch S as inputting means CI but also outputs the walk information D1 such as a processed walk step number data and the non-walk information D2 such as time data to display on the display portion D.

According to the arm mounting type electronic pedometer 1, it is preferable to place the acceleration sensor 60 in an environment sufficiently isolated from a disturbance since it is necessary to sufficiently amplify a weak walk signal of the acceleration sensor 60 easy to be affected by an influence of mechanical and electrical noise while it is necessary to integrate various circuit parts in an extremely narrow space of an area region (of the circuit board) at inside of the case 2. Particularly, when an amplified signal is inputted to the output portion of the acceleration sensor 60 per se, there is a concern that the acceleration sensor 60 is actually resonated to continue outputting the walk signal, and therefore, it is necessary to avoid the amplified signal from being inputted to the output portion of the acceleration sensor 60 per se. Although the walk signal is typically a signal of a repetition frequency of about 1 through 2 Hz (which is not necessarily constant), for example, the walk related digital signal per se outputted by the repetition frequency of about 1 through 2 Hz (which is not necessarily constant) at each time of detecting the walk is constituted by a mode of a pulse signal having a high frequency component, and therefore, the walk signal includes both a low frequency component in accordance with the repetition frequency and an extremely high frequency component constituting each pulse signal. Therefore, when the high frequency component of the walk related digital signal outputted from CPU is picked up by the output portion of the acceleration sensor 60 as a noise by the repetition frequency of about 1 through 2 Hz, there is a concern of erroneously recognizing the noise as the walk signal. Therefore, it is preferable to avoid as much as possible also a concern of picking up noise by a capacitive coupling or the like by making a portion of an output terminal of the acceleration sensor 60 or the like proximate to a processing portion or a line for transmitting the walk signal or the walk related digital signal after having been amplified by the amplifying means CA.

As is shown in Fig. 1 and Fig. 2, the electronic pedometer main body portion 3 includes a circuit board 10 extended perpendicularly to a thickness direction T at a middle portion in the thickness direction T. The circuit board 10 is a single layer board, and includes conductor patterns P and Q at a surface 11 on a side of a case back 4 as one main face and a surface 12 on a side of glass 5 as other main face. Further, in Fig. 1, a dial cover or the like on a back side of the glass 5 is omitted. Here, the conductive pattern P includes at least a comparatively wide conductive layer region which is not actually affected by an influence of a variation in electric charge, the conductive pattern Q includes at least a land portion or a pad portion soldered or press-fitted with terminals of various circuit parts to establish electric connection and wiring pattern portions in a narrow meaning between circuit parts. The case back side surface 11 of the circuit board 10 is arranged with a battery frame 20 including a battery containing recess portion 21, and a button type battery 22 is contained in the battery containing recess portion 21. In Fig. 2, a broken line indicates a position (position viewed along the thickness direction T) of an outer periphery of the battery disposed on this side of the section of Fig. 2. As is shown in Fig. 1, the glass side surface 12 of the circuit board 10 is fixedly arranged with a panel frame 30, and an LCD (liquid crystal display) panel 40 is held by panel holding projected portions (locking projected portions) 31, 31 and connectors 32, 32. A metal plate 50 as a plate-like conductor is arranged between the liquid crystal display panel 40 and the circuit board 10 by way of an elastic conductive terminal 51. The circuit board 10, the battery frame 20, the panel frame 30 are integrally fixed. The circuit board 10, the battery frame 20, the panel frame 30 may directly be fixed to each other or statically fixed in place relative to each other by way of the case 2.

Further in details, the circuit board 10 is constituted by forming the conductive patterns P, Q on the upper and lower surfaces 11, 12 of a so-to-speak glass-epoxy (glass fiber reinforced epoxy) board having a thickness of, for example, about 0.5 through 1 mm. As shown by Fig. 2, the conductive pattern Q of the glass side surface 12 of the circuit board 10 includes a conductive pattern portion Q1 for the piezoelectric acceleration sensor 60, a conductive pattern portion for the filter means (including a wiring pattern portion between various circuit parts constituting the filter circuit CF as the filtermeans) Q2, a conductive pattern portion for amplifying means (including a wiring pattern portion between various circuit parts constituting the amplifying circuit CA as the amplifying means) Q3, a conductive pattern portion Q4 for a data processing integrated circuit, a wiring pattern portion Q5 connecting the conductive pattern portions Q1, Q2, a wiring pattern portion Q6 connecting the conductive pattern portions Q2, Q3, a wiring pattern portion (not illustrated) connecting the conductive patterns Q3, Q4, a wiring pattern portion Q7 connected to other circuit part (not illustrated) and the like. In Fig. 2, as an exemplification of the wiring pattern portion Q7, only a wiring pattern portion connected from the data processing integrated circuit CPU to other circuit part (not illustrated) is shown. The conductive pattern portions Q1 for the piezoelectric type acceleration sensor, the conductive pattern portion Q2 for the filter means, the conducive pattern portion Q3 for the amplifying means and the conductive pattern portion Q4 for the data processing integrated circuit are respectively mounted with the piezoelectric type acceleration sensor 60, the filter circuit CF, the amplifying circuit CA and the data processing integrated circuit CPU. The conductive pattern portion Q1 for the piezoelectric type acceleration sensor for providing the output signal of the piezoelectric type acceleration sensor 60, includes a ground side conductive pattern portion Q11 and a signal output side conductive pattern portion Q12, and a ground side output terminal 61 and a signal side output terminal 62 as an output terminal on a side of a reference potential are soldered respectively by reflow. As is shown in Fig. 2, most portion of the acceleration sensor 60 is arranged to overlap the battery 22 in view from a direction along the thickness direction (that is, in view from a face as shown by Fig. 2). According to the example, a portion thereof overlapping the battery 22 is constituted by most portion of a cabinet of the sensor 60 including a total of the signal output side terminal 62, and only a portion of the ground side terminal 61 is disposed outside of a region of overlapping the battery 22. Further, according to the example, in order to facilitate to connect to the circuit part, the piezoelectric type acceleration sensor 60 is arranged such that the maximum sensitivity axis A is inclined to a direction of connecting 3 o'clock and 9 o'clock of the analog timepiece by a predetermined angle (for example, 12.5 degrees) and the signal side output terminal 62 is disposed on a side more proximate to a center portion of the circuit board 10 than the ground side terminal 61. As is shown in Fig. 2, according to the example, a longitudinal direction of the acceleration sensor 60 is more proximate to a diameter direction than a peripheral direction at a position of arranging the sensor 60.

Further, the conductive pattern shows exemplifiedly a portion necessary for exemplifiedly explaining the embodiment of the invention in the wiring pattern on the surface 12, actually, other various circuit parts are mounted on the surface 12, and a number of conductive patterns including a number of wiring patterns are formed in accordance therewith. For example, the wiring pattern portion Q7 includes an input line, not illustrated, connecting the push button switch S and the data processing integrated circuit CPU, and an output line connecting the data processing integrated circuit CPU and contact patterns (not illustrated) of the connectors 32, 32 for connecting LED 40. Further, for example, normally, a circuit part for emitting an acoustic signal such as a buzzer is included, and therefore, a conductive pattern related thereto is included. Further, when an EL panel or the like is included as a backlight of LCD 40, a conductive pattern related to a circuit part for driving the EL panel is included. Further, circuit parts include, for example, an oscillator such as a crystal can, a buzzer, a step-up coil for driving LED and the like, and wiring patterns include various power source lines and the like. As a result, although in Fig. 2, for convenience of explanation, the filter circuit CF, the amplifying circuit CA and the like are shown to respectively gather to inside of the desired region as a bundle, actually, also various circuit parts constituting the filter circuit CF and the amplifying circuit CA or the like are obliged to be arranged to distribute widely on the surface 12 of the narrow circuit board 10 having a maximum diameter equal to or smaller than about 2 through 3 cm at most, and also related wiring patterns are frequently difficult to avoid from being mixed complicatedly.

Further, as shown in Fig. 2, the input/output line Q7 of a signal to and from the data processing integrated circuit CPU as the digital data processing means is extended to detour the acceleration sensor 60 at a sufficient interval (for example, about 0.5 through 1 mm or more) from the piezoelectric type acceleration sensor 60. Thereby, a concern of mixing the noise caused by a walk related digital signal passing the input/output line Q7 of the data processing integrated circuit CPU to the output of the piezoelectric type acceleration sensor 60 is minimized.

On the other hand, the large conductive pattern P1 for the ground is formed as the conductive pattern P on the case back side surface 11 of the circuit board 10 disposed on the back face side of the battery 22 as shown by an imaginary line in Fig. 2. The ground pattern P1 includes a total of the back face of the output side terminal 62 of the piezoelectric type acceleration sensor 60 (region overlapping the output side terminal 62 in view from the thickness direction T)' and typically includes a total of the back face side of the total of the piezoelectric acceleration sensor 60 as is shown in Fig. 2. Thereby, a concern of invasion of noise from the back face side to the piezoelectric type acceleration sensor 60 is minimized. Further, the ground pattern P1 may be expanded to the entire region of the digital data processing integrated circuit CPU and the back face side of actually the entire region of the input/output wiring patterns to and from the integrated circuit CPU.

The conductive pattern P of the mode of the ground pattern P1 is actually brought into close contact with a lower face (face on a lower side in view from Fig. 1) of a bottom wall portion 23 of the battery frame 20. That is, normally, there is not a space of mounting a circuit part on the surface 11 of the circuit board 10 having the ground pattern P1. Therefore, according to the electronic pedometer 1, the region of the circuit board 10 which is actually difficult to be utilized owing to the presence of the battery frame 20 is maximally utilized as the wide ground pattern P1 for preventing invasion of the noise to the piezoelectric type acceleration sensor 60. In other words, although the back side of the region of the circuit board 10 mounted with the piezoelectric type acceleration sensor 60 is a region which inherently needs to form a large conductive pattern for providing a constant potential so far as the circuit board 10 is a multilayer board including a ground layer at a middle thereof (for example, the board 110 of the background art shown in Fig. 7), according to the electronic pedometer 1, by constituting the conductive pattern region by a region brought into contact with the bottom wall portion 23 of the battery frame 20 which is not provided with a space of mounting a circuit part inherently, the surface of the circuit board 10 is maximally and efficiently utilized. As a result, according to the electronic pedometer 1, an efficiency of utilizing the circuit board 10 is increased, although the circuit board 10 is constituted by the single layer board, a planar size (size in a plane orthogonal to the thickness direction T) of the circuit board 10 can be minimized. Further, although according to the electronic pedometer 1, the circuit board 10 is constituted by the single layer board having the conductive patterns P, Q only at the two faces 11, 12, in a case in which there is other object, when desired, the circuit board 10 may be constituted by a multilayer board having a separate conductive pattern layer at a middle in the thickness direction T.

The battery frame 20 includes an opening 24 (Fig. 2) as shown by an imaginary line at a region of the bottom wall portion 23 which is not opposed the conductive pattern P, a negative pole terminal 25 faces inside of the opening 24 as indicated by a broken line, and is brought into contact with the negative pole 26 disposed at a bottom face of the button type battery 22 contained at inside of the battery containing recess portion 21. Further, a positive pole terminal (not illustrated) electrically connected to the ground pattern P1 is brought into contact with a positive pole ,27 at the peripheral face of the battery 22 similar to that shown in, for example, the background art of Fig. 5.

However, when desired, the battery 22 may be arranged to the battery containing recess portion 21 in a direction in which the negative pole 26 of the battery 22 is opposed to the case back 4 (in a state of inverting upper and lower sides in Fig. 1) . In this case, the bottom wall portion 23 of the battery containing recess portion 22 may be omitted over an entire region, and the positive pole of the battery 22 exposed to a lower side in Fig. 1 may directly be brought into contact with the conductive pattern P for the ground disposed at the surface 11 of the circuit board 10.

According to the example, the liquid crystal panel 40 comprises a reflection type liquid crystal panel including glass boards 41, 42 interposing a liquid crystal layer therebetween and having a number of electrodes, and polarizers 43, 44 on both sides thereof. However, when desired, a back side of the polarizer 44 on the back face side may be provided with an EL (electroluminescence) panel or the like operated as a backlight.

The connectors 32, 32 having an elasticity such as rubber are arranged between the glass board 41 of the liquid crystal panel 40 supported by the locking projected portions 31, 31 of the panel frame 30 and the circuit board 10, are brought into press contact with a related terminal portion of the circuit board 10 and related terminal portions 45, 45 (see Fig. 2) of the glass board 41 to electrically connect therebetween, and provider a drive signal and the display information signal to the liquid crystal panel 40. Therefore, there is a concern that the connectors 32, 32 and the liquid crystal panel 40 constitute noise generating sources to the piezoelectric type acceleration sensor 60, and therefore, it is preferable to avoid the output side terminal 62 of the piezoelectric type acceleration sensor 60 to be excessively proximate to the noise sources. According to the electronic pedometer 1, as is shown in Fig. 1. and Fig. 2, the piezoelectric type acceleration sensor 60 is arranged such that the output side terminal 62 is disposed more to the center side of the circuit board 10 than the ground side terminal 61, whereby the output side terminal 62 is sufficiently made to be remote from the connector 32A.

The metal plate 50 comprises an SUS plate having a thickness of, for example, about 0.15 through 0.2 mm, and is pressed to the back face of the polarizer 44 on the depth side of the liquid crystal panel 40 by the elastic conductive terminal 51. According to the elastic conductive terminal 51, one end thereof is pressed to a ground pattern (not illustrated) disposed on the surface 12 of the circuit board 10, and the other end thereof is pressed to the back face of the metal plate 50 to thereby mechanically fix the metal plate 50 and maintains the metal plate 50 electrically at a ground potential. Further, according to the example, as is shown in Fig. 1, the elastic conductive terminal 51 is loosely fitted to a center hole of the cylindrical shape projected portion 33 formed at the center portion of the panel frame 30 so as not to be bent transversely or fallow down. Although in Fig. 1, only one set of the cylindrical projected portion 33 and the elastic conductive terminal 51 is shown, when a space can be ensured, a plurality of sets of the cylindrical projected portions 33 and the elastic conductive terminals 51 may be provided.

The metal plate 50 is provided with a size and a shape actually overlapping an entire range of the liquid crystal panel 40 and is statically placed with respect to the liquid crystal panel 40. Therefore, even when a digital signal or the like having a repetition frequency component similar to that of the walk signal is inputted and outputted to and from the liquid crystal panel 40 or flows or inside of the liquid crystal panel 40, noise in accordance with the signal can be shielded by the bulky metal plate 50, and therefore, a concern that the signal inputted and outputted to and from the liquid crystal panel 40 and the signal flowing inside of the liquid crystal panel 40 constituting noise for the output signal of the piezoelectric type acceleration sensor 60 is inconsiderable. Further, although the metal plate 50 need only be expanded in a range sufficient for shielding a region of the output side terminal 62 of the piezoelectric type acceleration sensor 60 of a region of the liquid crystal panel 40 comparatively proximate to the terminal 62, in order to firmly prevent invasion of noise from the liquid crystal panel 40 to the piezoelectric type acceleration sensor 60 and avoid invasion of noise from the liquid crystal panel 40 to other circuit part of CPU or the like, it is preferable that the metal plate 50 is expanded in a range similar to that of the liquid crystal panel 40. However, when invasion of noise to other circuit part does not actually pose a problem, in a state of being mounted to the circuit board 10, at a region of a circuit part having a height higher than that of the piezoelectric type acceleration sensor 60 (CPU in the example shown in Fig. 1), the metal plate 50 may be notched or the metal plate 50 may be provided with an opening to thereby further shorten an interval between the metal plate 50 and the piezoelectric type acceleration sensor 60 in the thickness direction. Further, when desired, in place of providing the metal plate 50, the piezoelectric type acceleration sensor 60 may be surrounded by a metal member having a section in a U-like shape fixed to the circuit board 10.

The panel frame 30 is provided with a projected portion 34 other than the cylindrical projected portion 33, having a height the same as that of the projected portion 33. In this case, even when the metal plate 50 is moved by an impact or the like, it can be prevented by top faces (lower faces in Fig. 1) of the projected portions 33, 34 that shielding by the metal plate 50 (for example, restraining a capacitive coupling or restraining invasion of a displacement current or the like) becomes insufficient by making the metal plate 50 excessively proximate to the piezoelectric type acceleration sensor 60. For example, when the metal plate 50 is excessively proximate thereto, there can be a concern that the output terminal of the piezoelectric type acceleration sensor 60 is affected by the influence of noise by electrostatic induction or the like. When there are a plurality of the cylindrical projected portions 33, the projected portion 34 may not be provided.

Further, even when there is assumedly radiation of light or the like from the liquid crystal panel 40 or the like, invasion of such a noise can be minimized by the metal plate 50. Further, when the liquid crystal panel 40 is a reflection type liquid crystal panel, or when there is a backlight such as an EL panel between the liquid crystal panel 40 and the metal plate panel 50, a surface of the metal plate 50 on a side of the liquid crystal panel can also be operated as a reflecting face. Further, when there is a backlight such as an EL panel between the liquid crystal panel 40 and the metal plate 50, depending on cases, the metal plate 50 can be utilized for providing a ground potential of an EL panel or the like.

According to the electronic pedometer 1 constituted as described above, when the piezoelectric type acceleration sensor 60 detects a walk, the output signal from the output terminal 62 of the sensor 60 is provided to the data processing integrated circuit CPU by way of the filter circuit CF and the amplifying circuit CA, and a walk data processing can be executed. Further, the conductive pattern P1 and the metal plate 50 can minimize various noises from being inputted to the output terminal 62 of the piezoelectric type acceleration sensor 60, and therefore, actually, only the walk signal from the output terminal 62 of the sensor 60 can accurately be used for the walk data processing.

In the above-described, the arm mounting type electronic pedometer 1 of the example explained can variously be modified as enumerated as follows within the range of the invention.
(1) Although in the above-described embodiment, an explanation has been given of an example that the positive pole 27 of the battery 22 constitutes the ground side terminal (electrically connected to constitute a potential the same as that of the ground side terminal), the negative pole 26 of the battery may constitute the ground side terminal.
(2) Further, either one of the wide conductive pattern P1 and the metal plate 50 for providing a stable potential may electrically be connected to either one of the positive pole 27 and the negative pole 26 of the battery 22 to constitute the same potential, and other of the conductive pattern P1 and the metal plate 50 may electrically be connected to other of the positive pole 27 and the negative pole 26 to constitute the same potential.
(3) Further, although an explanation has been given of an example in which the terminal 61 in the pair of output terminals 61, 62 of the piezoelectric type acceleration sensor 60 different from the signal output terminal 62 is set to the ground potential, in the above-described example or the various modified examples explained in (1) and (2), the reference side terminal 61 of the piezoelectric type acceleration sensor 60 need not be set to the ground potential but may be set to a potential the same as that of the positive pole 27 of the battery or that of the large metal member such as the negative pole 26, or may be set to a potential different from those of the positive pole 27 and the negative pole 26 (a constant potential relative to that of the positive pole 27 or the negative pole 26) so long as the reference side terminal 61 can firmly be set to a constant potential relative to that of the positive pole 27 of the battery or the large metal member such as the negative pole 26.

The aforegoing description has been given by way of example only and it will be appreciated by a person skilled in the art that modifications can be made without departing from the scope of the present invention.

## Claims

1. An arm mounting type electronic pedometer comprising:
a circuit board expanded perpendicularly to a thickness direction of the electronic pedometer at a middle portion in the thickness direction of the electronic pedometer;
a battery arranged on one main face side of the circuit board;
a piezoelectric type acceleration sensor for sensing a walk, being mounted to the circuit board at a region at least partially overlapping the battery in view from the thickness direction on other main face side of the circuit board; and
a conductive pattern formed at a region overlapping the piezoelectric type acceleration sensor in view from the thickness direction on a surface on the one main face side of the circuit board.

2. An arm mounting type electronic pedometer according to Claim 1, wherein the piezoelectric type acceleration sensor is arranged at a position at which a portion thereof including an output terminal on a side which is not a side of a reference potential in a pair of the output terminals of the piezoelectric type acceleration sensor overlaps the battery in view from the thickness direction.

3. An arm mounting type electronic pedometer according to Claim 1 or 2, wherein the conductive pattern is constituted to be connected to a positive pole or a negative pole of the battery.

4. An arm mounting type electronic pedometer according to any one of Claims 1 through 3, wherein the piezoelectric type acceleration sensor is mounted to the circuit board in a state in which a maximum sensitivity axis thereof coincides with a predetermined direction and a longitudinal direction of the acceleration sensor is directed in a direction more proximate to a diameter direction than a peripheral direction of the circuit board at a position of arranging the acceleration sensor.

5. An arm mounting type electronic pedometer according to any one of Claims 1 through 4, wherein a display panel is arranged on the other main face side of the circuit board at a location spaced apart from the circuit board by an interval therebetween, and a plate-like conductor is arranged between the circuit board and the display panel.

6. An arm mounting type electronic pedometer according to Claim 5, wherein the display panel includes a liquid crystal display panel.

7. An arm mounting type electronic pedometer according to Claim 5 or 6, further comprising an elastic conductive terminal arranged between a conductive pattern of conductive patterns on the circuit board connected to the positive pole or the negative pole of the battery and the plate-like conductor to maintain the plate-like conductor at a constant potential.

8. An arm mounting type electronic pedometer according to Claim 7, wherein the display panel includes an EL (electroluminescence) panel, and the plate-like conductor constitutes a ground electrode of the EL panel.

9. An arm mounting type electronic pedometer according to any one of Claims 5 through 8, further comprising a spacer for maintaining an interval between the piezoelectric electric acceleration sensor and the plate-like conductor constant.

10. An arm mounting type electronic pedometer according to any one of Claims 1 through 9, wherein an input/output signal wiring pattern of other circuit part mounted to the circuit board is formed at the circuit board to detour the piezoelectric type acceleration sensor.
